# EUROPÄISCHE PATENTANMELDUNG

(11) **EP 3 409 622 A1**
(43) Veröffentlichungstag der Anmeldung: **05.12.2018**
(21) Anmeldenummer: 18160466.1
(22) Anmeldetag: 07.03.2018
(51) Int. Cl.: B65G 47/90, B65B 61/06, B65B 61/28, B65B 5/06

(54) **VORRICHTUNG UND VERFAHREN ZUM UMGANG MIT IN MINDESTENS EINER REIHE VON HINTEREINANDER BEWEGTEN STÜCKGÜTERN**

(30) Priorität: 29.05.2017 DE 102017111653
(71) Anmelder: Krones Aktiengesellschaft, 93073 Neutraubling (DE)
(72) Erfinder: KIRZINGER, Johannes, 93073 Neutraubling (DE); WINZINGER, Frank, 93073 Neutraubling (DE)
(74) Vertreter: Benninger, Johannes

(57) **Zusammenfassung**

Die Erfindung betrifft eine Vorrichtung (1) und ein Verfahren zum Umgang mit in mindestens einer Reihe (1) hintereinander bewegten Stückgütern (7). Die Stückgüter umfassen jeweils eine Mehrzahl von durch eine Umverpackung (6) zusammengefassten Artikeln (4). Die Vorrichtung (1) weist wenigstens eine Transporteinrichtung (5) auf, über welche unmittelbar aufeinanderfolgende Artikel (4) in einer Reihe oder in einer Mehrzahl von Parallelreihen annähernd ohne Beabstandung oder mit minimalen Abständen als geschlossene Formation zu einem Stückgutvorbereitungs- oder -bereitstellungsmodul (2) transportiert werden können. Weiterhin umfasst die Vorrichtung (1) mindestens ein Stückgutvorbereitungs- oder -bereitstellungsmodul (2) zum Aufbringen der Umverpackung (6) um die Artikel (4) zur zumindest vorbereitenden Ausbildung von in mindestens einer Reihe annähernd ohne Beabstandung hintereinander angeordneten, mit einer Umverpackung (6) umhüllten Artikeln (4). Zudem ist mindestens ein Manipulator (10) für Stückgüter (7) vorgesehen, der einen Erfassungsbereich aufweist. Der mindestens eine Manipulator (5) ist zum klemmenden und/oder kraft- formschlüssigen Entgegennehmen sowie zum räumlichen Abtrennen und Überführen in eine Zielposition (P) und/oder - ausrichtung mindestens eines Stückgutes (7) aus einer Anordnung von in mindestens einer Reihe kontinuierlich in seinen Erfassungsbereich transportieren, ohne Beabstandung hintereinander angeordneten und mit einer Umverpackung (6) umfassten Artikeln (4) ausgestattet.

## Beschreibung

Die vorliegende Erfindung betrifft eine Vorrichtung und ein Verfahren zum Umgang mit in mindestens einer Reihe von hintereinander bewegten Stückgütern gemäß den Merkmalen der unabhängigen Ansprüche 1 und 11.

Bei bekannten Verfahren zur Verpackung und/oder Palettierung von Stückgütern wie Paketen, Gebinden o. dgl. werden diese zunächst auf in Linien fördernden Transporteinrichtungen befördert und in geeigneter Weise verschoben, ausgerichtet und/oder zusammengestellt, um gewünschte Lagenbilder zu erzeugen, die anschließend mehrfach übereinander gestapelt werden können, bspw. auf hierfür vorbereitete Paletten. Diese Behandlungsschritte können insbesondere bei Anlagen zur Behandlung von Behältern für Getränke sinnvoll eingesetzt werden. Bei den fraglichen Stückgütern kann es sich bspw. um Pakete, um Kästen, Kartons, Gebinde oder Cluster handeln. Damit die erwähnten Paletten transportsicher sind, müssen die zusammengestellten Lagenbilder, die auch als zusammengestellte Takte bezeichnet werden, bestimmte Anforderungen erfüllen. Herkömmlicherweise sind zur Ausbildung solcher Takte vorbereitende Maßnahmen notwendig, die etwa darin bestehen, die zunächst regelmäßig oder schrittweise auf einem sog. Zuteilungsband beförderten Stückgüter auf einem zwischengeschalteten Transportband zu gruppieren bzw. zu sammeln, um sie von dort gesammelt und/oder gruppiert an ein Lagenbildungsband oder einen Lagenbildungstisch zu übergeben.

Aus dem Stand der Technik ist es bekannt, Stückgüter vereinzelt von einem Zuteilband auf ein Transportband zu übergeben, womit gemeint ist, dass auf dem Zuteilband jeweils einzelne Stückgüter an das Transportband übergeben werden. Diese Übergabe kann dadurch erfolgen, dass jedes einzelne Stückgut durch einen Geschwindigkeitsunterschied zwischen Zuteilband und Transportband einzeln auf das Transportband übergeben wird, wobei eine Steuerung durch optische Sensoren wie etwa Lichtschranken vorhanden sein kann. Ebenso denkbar ist es, die Stückgüter vereinzelt von dem Transportband durch schrittweises Fahren des Lagenbildungsbandes zu übergeben. Um auf eine solche Weise jeweils einzelne Stückgüter vom Transportband auf das Lagenbildungsband zu übergeben, kann das Lagenbildungsband in synchronisierten Schritten mit dem Transportband genau um eine Länge eines Stückgutes in Transportrichtung verfahren werden. Auf dem Transportband können diese Takte oder Gruppierungen bzw. Teile der gruppierten Stückgüter je nach gewünschter Lagenbildung auch gedreht werden, um dann an das Lagenbildungsband übergeben zu werden.

Das Dokument EP 1 465 101 A2 offenbart eine Vorrichtung zur Reihenbildung von Packgütern für Gebindepalletierer. Der Gebindepalletierer umfasst mindestens eine Lagenstation und mindestens eine Palletierstation. Die Reihenbildungsvorrichtung umfasst mindestens eine Positionierstation, auf der die Packgüter während des Transports in mindestens einer Reihe mit gewünschten Abständen angeordnet werden. Die Positionierstation ist an einen der Lagenstation zugeordneten Bereitstellungsförderer angeschlossen. Stromaufwärts der Positionierstation ist mindestens ein Stauförderer angeordnet, wobei die Positionierstation mehrere in Transportrichtung hintereinander angeordnete Förderabschnitte mit steuer- und regelbaren Antrieben besitzt. Mit den steuer- und regelbaren Antrieben ist es möglich, eine gewünschte Abstandsbildung der Packgüter zu erzielen. Die Reihenbildungsvorrichtung besitzt mindestens eine Überwachungseinrichtung zur Ermittlung und Überwachung der Abstandsbildung der Packgüter. Der Aufbau dieser bekannten Reihenbildungsvorrichtung ist relativ aufwendig und kompliziert, zumal er eine Vielzahl von Bändern erfordert, die für eine Abstandsbildung und/oder Drehung der Packgüter benötigt werden.

Aus US 5 123 231 A ist eine Vorrichtung zur Zusammenstellung von Artikeln zu Gruppen und zu deren anschließenden Verpackung bekannt. Auf einem Zuführband werden die Artikel jeweils unter einem vordefinierten Abstand einem Sammelband zugeführt, auf dem die Gruppen aus einer immer gleichen Anzahl von Artikeln zusammengestellt werden. Die Gruppen werden mit einem nachfolgenden Band einer Verpackungseinrichtung zugeführt.

Der anhand von unterschiedlichen Dokumenten veranschaulichte bekannte Stand der Technik kann in der Praxis mehrere Nachteile mit sich bringen. Beim Lückenziehen oder Übergeben der Stückgüter zwischen Zuteilband, Transportband und ggf. auch Lagenbildungsband entsteht das Risiko, durch die jeweiligen Geschwindigkeitsunterschiede und hohen Beschleunigungs- und/oder entsprechend steilen Verzögerungsrampen die Stückgüter nicht in der anzustrebenden exakten Weise übergeben zu können. Einzelne Stückgüter können sich sogar von ihren vorgegebenen Positionen ab- oder wegdrehen. Eine nicht zu vernachlässigende Rolle spielt kommt zudem dem Reibwiderstand zwischen dem jeweiligen Förder- oder Transportband und der Unterseite des jeweiligen Stückgutes zu, was dazu führt, dass die Lücken zwischen den Takten nicht exakt reproduzierbar sind, sondern unterschiedlich ausfallen können. Zusätzlich kann ein Leistungsverlust entstehen, der sich durch den zurückzulegenden Weg der einzelnen Lücken beim sogenannten Eintakten vom Zuteilband auf das Transportband ergibt. Alle diese Effekte erhöhen die Zeitdauer, die für die Erstellung einer Palette benötigt wird.

Nachteilig ist bei den bekannten Systemen, dass die Anlagen lange Transport- / Stau- und Pufferstrecken benötigen, wodurch der Platzbedarf (footprint) solcher Anlagen sehr hoch ist. Ziel der Erfindung ist es deshalb, eine kompakte Anlage mit möglichst geringem Platzbedarf bereitzustellen, mittels welcher auf einfache Art und Weise Artikel vermittels einer Umverpackung zu Stückgütern zusammengefasst und Lagen an Stückgütern mit unterschiedlichen Größen gebildet werden können. Zudem sollen sich das Verfahren und die Vorrichtung durch eine hohe Flexibilität bei der Erstellung solcher Lagen auszeichnen.

Diese Ziele der Erfindung werden mit den Gegenständen der unabhängigen Ansprüche, d.h. mit einer Vorrichtung und einem Verfahren zum Umgang mit in mindestens einer Reihe hintereinander bewegten Stückgütern erreicht, welche die Merkmale der unabhängigen Patentansprüche umfassen. Merkmale vorteilhafter Weiterbildungen der Erfindung ergeben sich aus den jeweiligen abhängigen Ansprüchen.

Die Erfindung bezieht sich auf eine Vorrichtung und ein Verfahren zum Umgang mit in mindestens einer Reihe hintereinander bewegten Stückgütern. Unter Stückgütern ist insbesondere eine Mehrzahl von durch eine Umverpackung zusammengefassten Artikeln zu verstehen, beispielsweise eine Mehrzahl von gleichen oder unterschiedlichen Getränkebehältern in Form von Flaschen oder Dosen o.ä., die durch eine Stretchfolie oder eine Umreifung zu einem Gebinde bzw. Mischgebinde zusammengefasst sind. Die in mindestens einer Reihe hintereinander bewegten Stückgüter können dabei je nach Anforderung eines nachfolgenden Manipulators einer Handhabungsvorrichtung gleich oder unterschiedlich ausgebildet sein.

Die Vorrichtung umfasst wenigstens eine Transporteinrichtung, über welche unmittelbar aufeinanderfolgende Artikel in einer Reihe oder in einer Mehrzahl von Parallelreihen annähernd ohne Beabstandung als geschlossene Formation zu einem Stückgutvorbereitungs- oder -bereitstellungsmodul transportiert werden. In dem Stückgutvorbereitungs- oder -bereitstellungsmodul erfolgt das Aufbringen der Umverpackung um die Artikel zur zumindest vorbereitenden Ausbildung von Stückgütern. Insbesondere wird hierbei die geschlossene Formation der Artikel im Wesentlichen beibehalten. Mit dem Begriff der geschlossenen Formation ist eine weitgehend lückenlose Aufeinanderfolge von Artikeln innerhalb einer Reihe oder innerhalb mehrerer aneinandergrenzender Parallelreihen gemeint, wobei die Artikel innerhalb der jeweiligen Reihe ohne Abstand oder mit geringem Abstand zueinander hintereinander transportiert werden. Insbesondere handelt es sich um eine Endlos- Formation, die keine Unterbrechung aufweist und eine beliebige Anzahl von Artikeln umfasst.

Die durch eine Umverpackung in geschlossener Formation zusammengefassten Artikel laufen in einen Erfassungsbereich mindestens eines Manipulators ein, wobei der mindestens eine Manipulator zum klemmenden und/oder kraft- formschlüssigen Entgegennehmen sowie zum Abtrennen und Überführen in eine Zielposition und/oder - ausrichtung mindestens eines Stückgutes aus einer Anordnung von in mindestens einer Reihe kontinuierlich in seinen Erfassungsbereich transportieren, ohne Beabstandung hintereinander angeordneten und mit einer Umverpackung umfassten Artikeln ausgestattet ist.

Gemäß einer Ausführungsform kann vorgesehen sein, dass die Artikel innerhalb des Stückgutvorbereitungs- oder -bereitstellungsmodul abschließend mit einer Umverpackung umfasst und somit mindestens eine Reihe von hintereinander bewegten Stückgütern ausgebildet wird/werden, wobei die Stückgüter vorzugsweise ohne Beabstandung hintereinander angeordnet sind und lückenlos dem Manipulator der nachfolgenden Handhabungsvorrichtung zugeführt werden. Die erzeugten Stückgütee liegen somit ebenfalls in einer geschlossenen Formation vor und werden in geschlossener Formation dem Manipulator zugeführt. Beispielsweise kann mindestens ein Umreifungsband um eine Mehrzahl von Artikeln angeordnet werden, wobei die Anordnung der Artikel durch den Umreifungsprozess nicht gestört wird, so dass die lückenlose Anordnung der Artikel beibehalten wird und dementsprechend Stückgüter ausgebildet werden, die ebenfalls lückenlos in mindestens einer Reihe hintereinander angeordnet sind. Insbesondere wird das mindestens eine Umreifungsband von oben her über die als Gruppe zusammenzufassenden Artikel übergestülpt o.ä. Eine weitere Ausführungsform sieht das Zusammenfassen einer Mehrzahl von Artikeln durch sogenannte Stretchhülsen bzw. Sleeves vor, die ebenfalls vorzugsweise von oben auf die Artikel übergestülpt werden, ohne die Anordnung zu unterbrechen. Weitere Verfahren zum Zusammenfassen von Artikeln, die den Artikelstrom nicht unterbrechen, sollen ebenfalls von der Erfindung umfasst sein. Minimale Lücken können dabei auftreten, beispielsweise durch das Überstülpen von Sleeves zwischen zwei benachbarte Stückgüter. Diese Abstände oder Lücken sind jedoch insbesondere kleiner als 5cm, bevorzugt kleiner als 1 cm.

Gemäß einer weiteren Ausführungsform ist das Stückgutvorbereitungs- oder -bereitstellungsmodul ein Stretchpackmodul zur Umwickelung der als Artikelstrom bzw. in Formation einlaufenden Artikel mit einer Stretchfolie unter Ausbildung einer Artikel-Endlosanordnung und Abtrennung der einzelnen Stückgüter vermittels einer geeigneten Abtrennvorrichtung, insbesondere Schneidvorrichtung. Eine solche Vorrichtung und ein entsprechendes Verfahren werden in der Anmeldung mit dem Aktenzeichen DE 10 2016 200 554.5 beschrieben, deren Inhalt hiermit in diese Anmeldung aufgenommen wird und deren Inhalt dem Leser der vorliegenden Anmeldung als bekannt gelten soll. Hierbei ist es möglich, unterschiedliche Stückgutgrößen, d.h. Stückgüter, bei denen jeweils eine unterschiedliche Anzahl an Artikeln vermittels der Umverpackung zusammengefasst ist, herzustellen. Beispielsweise können bei einem Einlauf von Artikeln in zwei Parallelreihen auf einfache Weise Zweiergebinde, Vierergebinde, Sechsergebinde, Achtergebinde etc., d.h. Gebinde mit zwei, vier, sechs, acht oder mehr jeweils paarweise nebeneinanderstehenden Artikeln ausgebildet werden, so dass die Möglichkeit besteht, nachfolgend Anordnungen der Stückgüter in palettierfähigen Lagen zu erzeugen, wobei unterschiedlich große Stückgüter in einer gemeinsamen Lagenanordnung angeordnet sind.

Das Auftrennen des Artikelstroms kann dabei bspw. durch mechanisches Schneiden, bspw. mittels Hitzedraht, mittels Ultraschallschneidens, mittels normalen Schneidedrahts, oder auch mittels eines Laserstrahls, der die Folie zerschneidet, erfolgen.

Gemäß einer alternativen Ausführungsform werden die Artikel innerhalb des Stückgutvorbereitungs- oder -bereitstellungsmodul mit einer Umverpackung zu einer Artikel- Endlosanordnung zusammengefasst, wobei die abschließende Ausbildung der vorzugsweise ohne Beabstandung hintereinander bewegten Stückgüter zwischen dem Stückgutvorbereitungs- oder -bereitstellungsmodul und der Handhabungsvorrichtung oder innerhalb der Handhabungsvorrichtung erfolgt. Insbesondere kann vorgesehen sein, dass die Abtrennung der einzelnen Stückgüter von der Artikel- Endlosanordnung erst im Zusammenhang mit der räumlichen Abtrennung der Stückgüter und nachfolgenden Anordnung in einer Zielposition und/oder -ausrichtung erfolgt.

Auch bei dieser Ausführungsform kann vorgesehen sein, dass das Stückgutvorbereitungs- oder -bereitstellungsmodul ein Stretchpackmodul ist. In diesem Fall ist die Schneidvorrichtung nicht innerhalb des Stretchpackmoduls ausgebildet, sondern beispielsweise zwischen dem Stretchpackmodul und der nachfolgenden Handhabungsvorrichtung mit dem mindestens einen Manipulator angeordnet. Alternativ könnte die Schneidvorrichtung auch einen Bestandteil der nachfolgenden Handhabungsvorrichtung bilden und beispielsweise direkt am Manipulator angeordnet sein.

Ebenso denkbar ist die Auftrennung des umwickelten Artikelstroms an Perforierungen, wobei die gewünschte Gebindegröße durch Aufreißen der entsprechenden Perforierungen erfolgen kann. Das Abtrennen der Stückgüter erfolgt vorzugsweise im Zusammenhang einer räumlichen Abtrennung der Stückgüter und nachfolgende Anordnung in einer Zielposition und/oder -ausrichtung durch den Manipulator. Die Perforationen werden mittels der Perforationsvorrichtung an geeigneten Stellen des mit Stretchfolie umwickelten Artikelstroms angebracht, wobei die Perforationsvorrichtung beispielsweise Bestandteil des Stretchpackmoduls oder zwischen dem Stretchpackmodul und der nachfolgenden Handhabungsvorrichtung angeordnet oder einen Bestandteil der nachfolgenden Handhabungsvorrichtung bildet und beispielsweise direkt am Manipulator angeordnet ist. Das Abtrennen der Stückgüter kann in diesem Fall durch ein Aufreißen der den Artikelstrom umwickelnden Stretchfolie bzw. ein Auseinanderreißen der Artikel- Endlosanordnung an den Perforationen erfolgen, insbesondere durch ein Auseinanderziehen mittels des Manipulators der Handhabungsvorrichtung beim Abgreifen zur Abtrennen und Überführen eine Stückgutes gewünschter Größe in eine Zielposition und/oder -ausrichtung. Insbesondere greift der Manipulator in diesem Fall ein Stückgut umfassend eine Anzahl von Artikeln ab, dass in seiner Länge auf die Abmessungen einer Palette abgestimmt ist. So können die durch Trennen des endlosen Artikelstroms gebildeten Stückgüter beispielsweise exakt so lang sein wie eine Längs- oder Querseite einer Palette, auf die das Stückgut abgelegt werden soll. Mehrere solcher gleichartigen Stückgüter können dann nebeneinander angeordnet werden, wodurch eine komplette palettierbare und stapelbare Stückgutlage gebildet ist. Alternativ können jedoch auch unterschiedlich große Stückgüter erzeugt und durch den Manipulator für die nachfolgende Palettierung in einer geeigneten Lage zusammengestellt werden.

Gemäß einer weiteren bevorzugten Ausführungsform ist die Schneidvorrichtung oder die Perforationsvorrichtung zur Abtrennung einzelner Stückgüter von der Artikel-Endlosanordnung am Manipulator angeordnet und die Abtrennung mindestens eines einzelnen Stückgutes von der Artikel- Endlosanordnung erfolgt im Zusammenhang mit einer räumlichen Abtrennung des Stückgutes und nachfolgende Anordnung in einer Zielposition und/oder -ausrichtung durch den Manipulator. Somit kann die Bildung der Stückgutgrößen anhand der notwendigen Takte für die Bildung einer Lagenanordnung gekoppelt werden.

Vorzugsweise ist vorgesehen, dass die Vorrichtung eine Steuerungseinrichtung umfasst, wobei der Manipulator und/oder die Schneidvorrichtung und/oder Perforationsvorrichtung-über die Steuerungseinrichtung ansteuerbar is/sind, und zwar unabhängig davon, ob die Schneidvorrichtung oder Perforationsvorrichtung innerhalb des Stretchpackmoduls oder zwischen Stretchpackmodul und nachfolgender Handhabungsvorrichtung angeordnet ist oder als Bestandteil der nachfolgenden Handhabungsvorrichtung ausgebildet ist.

Bei Anordnung der Schneidvorrichtung oder Perforationsvorrichtung am Manipulator kann die Sicherheit des Abtrennvorgangs erhöht werden. Insbesondere kann vorgesehen sein, dass der Manipulator an der Artikel- Endlosanordnung ansetzt und durch eine kurzzeitige Ziehbewegung in Transportrichtung die als Stückgut abzutrennenden Artikel von den nachfolgenden Artikeln der Artikel- Endlosanordnung geringfügig beabstandet. Dadurch dehnt sich die Stretchfolie, die die Artikel der Artikel-Endlosanordnung umwickelt, und der derart zwischen den Artikeln hergestellte Abstand erlaubt einen sicheren Schnitt, ohne dass die Artikel dabei beschädigt werden. Zudem legt sich der derart gedehnte Bereich der Stretchfolie gut um die Artikel herum an und bildet somit eine sicheren Zusammenhalt für die Artikel des Stückgutes.

Bei allen vorbeschriebenen Ausführungsformen einer Vorrichtung umfassend ein Stretchpackmodul besteht eine steuerungstechnische Kopplung zwischen der Schneidvorrichtung oder Perforationsvorrichtung und dem Manipulator der Handhabungsvorrichtung. Dadurch können unterschiedlich große Stückgüter erzeugt und vermittels des Manipulators in eine geeignete Zielposition und/oder Zielanordnung verbracht werden.

Gemäß einer Ausführungsform kann weiterhin vorgesehen sein, dass zwischen dem Stretchpackmodul und dem Manipulator der Handhabungsvorrichtung noch ein Tragegriff auf die Stückgüter aufgebracht wird, insbesondere dann, wenn der Manipulator der Handhabungsvorrichtung zur Lagenvorbereitung für einen Palettierer dient. Dient der Manipulator der Handhabungsvorrichtung lediglich als Verteilsystem, so dass vor einer Palettierung noch ein weiterer Manipulator einer weiteren Handhabungsvorrichtung vorgesehen notwendig ist, um ein entsprechendes Lagenschema aus einer Mehrzahl von Stückgütern zu bilden, kann eine Tragegriffanbringung auch zwischen den beiden Manipulatoren auf herkömmliche Art erfolgen.

Nachfolgend wird das Aufbringen eines Tragegriffes für ein Gruppiermodul mit Manipulator beschrieben, bei dem der Manipulator die im Stretchpackmodul gebildeten Stückgüter abgreift und entsprechend eines Lagenschemas für eine anschließende Palettierung anordnet. Da die Stückgüter, beispielsweise Gebinde, aus dem Stretchpackmodul mit ihrer offenen Seite in Transportrichtung nach vorn dem Manipulator der Handhabungsvorrichtung bzw. des Gruppiermoduls zugeführt werden, kann ein Tragegriff nicht unbedingt auf herkömmlich bekannte Weise aufgebracht werden. Für das Aufbringen des Tragegriffes gibt es dementsprechend unterschiedliche Möglichkeiten:
Gemäß einer ersten Möglichkeit werden die Stückgüter im oder unmittelbar nach dem Stretchpackmodul von der mit Stretchfolie umwickelten Artikel- Endlosanordnung abgeschnitten. Das Stückgut wird um 90° gedreht und der Tragegriff kann auf herkömmlich bekannte Weise am Stückgut angebracht werden. Vorzugsweise wird der Tragegriff dabei an den mit der Umhüllung umhüllten Seiten des Stückgutes aufgeklebt. Die mit Tragegriff versehenen Stückgüter werden anschließend dem Manipulator der Handhabungsvorrichtung zugeführt.

Gemäß einer zweiten Möglichkeit werden die Stückgüter im oder unmittelbar nach dem Stretchpackmodul von der mit Stretchfolie umwickelten Artikel- Endlosanordnung abgeschnitten. Nunmehr wird der Tragegriff an den offenen Seiten des Stückgutes angebracht, insbesondere direkt an den Stückgütern selbst, durch die "Folienaugen" hindurch. D.h., der Tragegriff wird an den nicht mit der Stretchfolie umhüllten Seiten des Stückgutes aufgeklebt. Die mit Tragegriff versehenen Stückgüter werden anschließend dem Manipulator der Handhabungsvorrichtung zugeführt.

Gemäß einer dritten Möglichkeit werden die Stückgüter im oder unmittelbar nach dem Stretchpackmodul oder erst im Erfassungsbereich des Manipulators von der mit Stretchfolie umwickelten Artikel- Endlosanordnung abgeschnitten. Nunmehr wird der Tragegriff auf an den mit der Stretchfolie umhüllten Seiten der Stückgüter derart angebracht, dass der Tragegriffapplikationskopf nicht wie herkömmlich in einer Ebene gedreht wird, die durch eine Vertikale und die Transportrichtung aufgespannt wird, sondern in einer Ebene senkrecht dazu. Zusätzlich kann es bei einem kontinuierlichem Transport der Stückgüter nötig sein, den Applikationskopf für den Tragegriff mit der Transporteinrichtung mitlaufend zu bewegen, um beide Enden des Tragegriffs exakt an gegenüberliegenden Seiten der Stückgüter anzuordnen. Bevorzugt sind mehrere Applikationsköpfe umlaufend vorgesehen.

In weiteren alternativen Ausführungsformen wird kein Tragegriff auf die Stückgüter aufgebracht oder ein Abschnitt der Stretchfolie selbst dient als Tragegriff.

Gemäß einer weiteren Ausführungsform kann vorgesehen sein, dass ein Tragegriff in die Umverpackung eingeschnitten oder eingestochen werden kann. Insbesondere bei Stückgütern, die durch eine Stretchfolie zusammengefasst sind, können ein oder mehrere transversale Schnitte auf gegenüberliegenden Seiten einer Reihe von Artikeln, die sich im Schwerpunktbereich des Stückgutes befinden, angebracht werden. Die Schnitte sind hierbei derart angeordnet, dass die eine elastische Spannung in der Stretchfolie freigeben, die ein Kräuseln der Kanten der Stretchfolie zumindest in Richtung eines zentralen Faltbandes ermöglicht, das als Tragegriff dient. Ein entsprechendes Schneidwerkzeug zum Einbringen der Schnitte kann innerhalb des Stretchpackmoduls angeordnet sein. Alternativ kann vorgesehen sein, dass ein solches Schneidwerkzeug Bestandteil des Manipulators ist, so dass die Schnitte im zeitlichen Zusammenhang mit der räumlichen Abtrennung des Stückgutes und nachfolgender Anordnung in einer Zielposition und/oder -ausrichtung durch den Manipulator am Stückgut angebracht werden.

Unabhängig von der Ausbildung des Stückgutvorbereitungs- oder -bereitstellungsmodul kann die beschriebene Vorrichtung eine Steuerungseinrichtung umfassen, über welche der mindestens eine Manipulator zum klemmenden und/oder kraft- und/oder formschlüssigen Erfassen von mit einer Umverpackung umfassten Artikeln und zum räumlichen Abtrennen des mindesten einen Stückgutes sowie zum Verbringen des mindestens einen Stückgutes in die definierte Zielposition und/oder -ausrichtung angesteuert werden kann, wobei auf der Steuerungseinrichtung Informationen zu einer aus einer Vielzahl an Stückgütern zu bildenden Anordnung hinterlegt sind, wobei die Zielposition und/oder -ausrichtung als Bestandteil der Informationen dem jeweiligen mindestens einen Stückgut eine bestimmte Lage und/oder relative Orientierung innerhalb der Anordnung zuordnet. Die zu bildende Anordnung kann dabei beispielsweise als eine Reihe, mehrere Parallelreihen, eine Teillage, oder eine Lagenanordnung definiert sein, wobei die Stückgüter jeweils identische Größen oder aber auch unterschiedliche Größen innerhalb der Reihe, Parallelreihe, Teillage oder Lagenanordnung aufweisen können.

In der Regel benötigt die vorbeschriebene Vorrichtung im Gegensatz zu aus dem Stand der Technik bekannten Verpackungs- und Gruppieranlagen keinen Puffer- und/oder Transferbereich zwischen dem Stückgutvorbereitungs- oder -bereitstellungsmodul und der Handhabungsvorrichtung bzw. dem Erfassungsbereich für den Manipulator, da der Manipulator die lückenlos hintereinander erzeugten Stückgüter auch lückenlos abarbeiten kann. Dagegen werden von mit einer Schrumpfverpackung zusammengefasste Artikel beabstandet durch einen Schrumpftunnel geführt, damit die warme Luft allseitig um die mit Schrumpffolie umhüllten Artikel herumströmen kann. Zudem ist nach dem Schumpftunnel eine sogenannte Leerfahrstrecke notwendig, um beispielsweise bei einem Produktionsstopp aufgrund eines Defekts in einem nachfolgenden Gruppiermodul die sich im Schumpftunnel befindenden Produkte aus diesem herausfahren zu können, da diese bei einem verlängerten Verbleib im Schrumpftunnel beschädigt werden würden und auszusondern wären. Für einige Anwendungen kann jedoch die Ausbildung eines Transferbereichs zwischen dem Stückgutvorbereitungs- oder -bereitstellungsmodul und der Handhabungsvorrichtung bzw. dem Erfassungsbereich für den Manipulator vorteilhaft sein. Vorzugsweise kann ein solcher Transferbereich jedoch sehr kurz ausgebildet werden, insbesondere kann ein solcher Transferbereich eine maximale Länge von 20m aufweisen. Vorzugsweise ist ein solcher Transferbereich kürzer als 10m, besonders bevorzugt kürzer als 5m.

Durch das komplette Fehlen eines Transferbereichs bzw. durch die Ausbildung eines nur sehr kurzen Transferbereiches zwischen dem Stückgutvorbereitungs- oder -bereitstellungsmodul und der Handhabungsvorrichtung mit dem Manipulator, beispielsweise zur Gruppierung von Stückgütern nach einem definierten Lagenschema, kann die Vorrichtung sehr kompakt ausgeführt werden und weist somit einen deutlich geringeren Platzbedarf (Footprint) auf als vergleichbare aus dem Stand der Technik bekannte Verpackungs- und Palettieranlagen, insbesondere Anlagen mit einem Schrumpftunnel o.ä. Insbesondere ist weder die Vorrichtung mit einem Schrumpftunnel ausgestattet noch ist ihr ein Schrumpftunnel vor- oder nachgeordnet. D.h. die Vorrichtung ist schrumpftunnellos ausgebildet.

Das Verfahren zum Handhaben der Stückgüter dient insbesondere der Verpackung von Artikeln mit einer Unverpackung, die nicht durch Schrumpffolie gebildet wird. Vorzugsweise wird als Umverpackung Stretchfolie verwendet. Dies ist vorteilhaft, da bei der Verwendung von Stretchfolie der Energieverbrauch der Vorrichtung deutlich reduziert werden kann.

Es sei an dieser Stelle ausdrücklich erwähnt, dass alle Aspekte und Ausführungsvarianten, die im Zusammenhang mit der erfindungsgemäßen Vorrichtung erläutert wurden, gleichermaßen Teilaspekte des erfindungsgemäßen Verfahrens betreffen oder sein können. Wenn daher an einer Stelle bei der Beschreibung oder auch bei den Anspruchsdefinitionen zur erfindungsgemäßen Vorrichtung von bestimmten Aspekten und/oder Zusammenhängen und/oder Wirkungen die Rede ist, so gilt dies gleichermaßen für das erfindungsgemäße Verfahren. In umgekehrter Weise gilt dasselbe, so dass auch alle Aspekte und Ausführungsvarianten, die im Zusammenhang mit dem erfindungsgemäßen Verfahren erläutert wurden, gleichermaßen Teilaspekte der erfindungsgemäßen Vorrichtung betreffen oder sein können. Wenn daher an einer Stelle bei der Beschreibung oder auch bei den Anspruchsdefinitionen zum erfindungsgemäßen Verfahren von bestimmten Aspekten und/oder Zusammenhängen und/oder Wirkungen die Rede ist, so gilt dies gleichermaßen für die erfindungsgemäße Vorrichtung.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Figur 1 zeigt schematisch eine erste Ausführungsform einer Behälterbehandlungsvorrichtung.
Figur 2 zeigt eine seitliche Darstellung einer zweiten Ausführungsform einer Behälterbehandlungsvorrichtung.
Figur 3 zeigt eine seitliche Darstellung einer weiteren Ausführungsform einer Behälterbehandlungsvorrichtung mit einer in das Gruppiermodul einlaufenden mit Stretchfolie umwickelten Artikelstange.
Figur 4 zeigt eine Darstellung gemäß Figur 3 von oben.
Figur 5 zeigt ein Abgreifen von mit Stretchfolie umwickelten Artikeln von einer gemäß Figur 3 in ein Gruppiermodul einlaufenden Artikelstange.
Figur 6 zeigt eine Darstellung gemäß Figur 5 von oben.
Figur 7 zeigt ein Abtrennen von mit Stretchfolie umwickelten Artikeln von einer gemäß Figur 3 in das Gruppiermodul einlaufenden Artikelstange.
Figur 8 zeigt eine Darstellung gemäß Figur 7 von oben.
Figuren 9 bis 13 zeigen weitere Arbeitsschritte innerhalb einer Behälterbehandlungsvorrichtung gemäß Figur 3.
Figuren 14 bis 17 zeigen Möglichkeiten des Abtrennens einer Mehrzahl von Artikeln von einer mit Stretchfolie umwickelten Artikelstange zur Ausbildung unterschiedlicher Gebinde.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung und das erfindungsgemäße Verfahren ausgestaltet sein können und stellen keine abschließende Begrenzung dar.

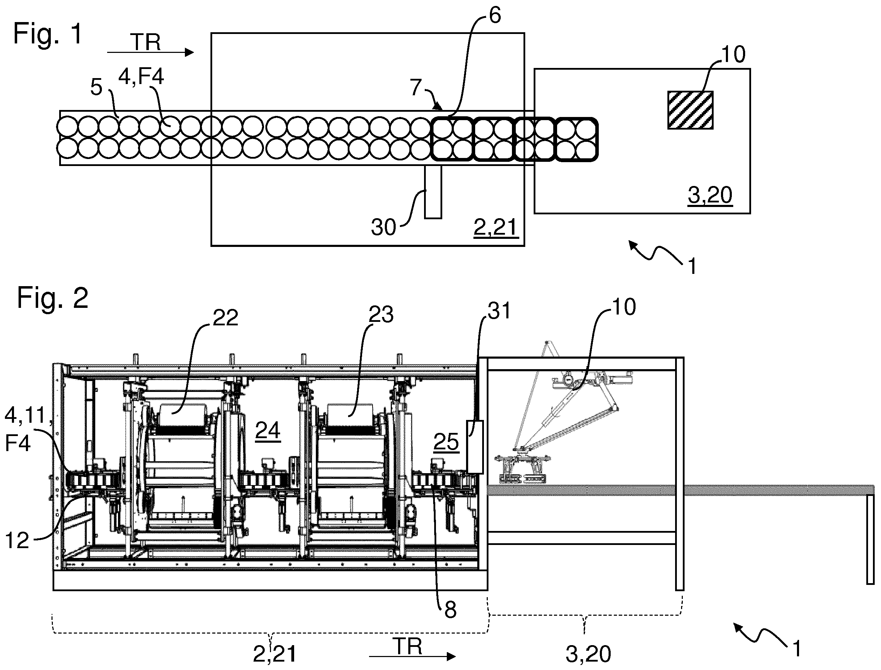

Figur 1 zeigt schematisch eine Behälterbehandlungsvorrichtung 1 von oben. Dieses umfasst ein erstes Gebindebildungsmodul 2 und ein nachfolgendes Gebindehandhabungsmodul 3, beispielsweise ein Gruppiermodul 20. Die Artikel 4, beispielsweise Getränkebehälter in Form von Flaschen, Dosen, o.ä. werden über eine erste Transporteinrichtung 5 geordnet dem Gebindebildungsmodul 2 zugeführt. Beispielsweise handelt es sich bei der ersten Transporteinrichtung 5 um ein Förderband, auf dem die Artikel 4 in zwei unmittelbar benachbarten Reihen, weitgehend lückenlos aneinandergrenzend, stehend als geschlossene Formation F4 in Transportrichtung TR bewegt werden. Innerhalb des Gebindebildungsmodul 2 werden jeweils eine definierte Anzahl der lückenlos zugeführten Artikel 4 durch eine Umverpackung 6 zu Gebinden 7 zusammengefasst. Die derart gebildeten Gebinde 7 bilden insbesondere mindestens eine Reihe von in Transportrichtung TR lückenlos hintereinander angeordneten Stückgütern, die als geschlossene Formation F7 in Transportrichtung TR direkt in das Gebindehandhabungsmodul 3 überführt und dort entsprechend bearbeitet werden. In dem Gebindehandhabungsmodul 3 können die in lückenloser Formation F7 einlaufenden Gebinde 7 beispielsweise auf mehrere nachfolgende Spuren verteilt und dabei von den in das Gebindehandhabungsmodul 3 in geschlossener Formation einlaufenden Gebinden 7 abgetrennt, beabstandet und gegebenenfalls dabei gedreht werden. Handelt es sich bei dem Gebindehandhabungsmodul 3 um ein Gruppiermodul 20, so werden die in Formation F7 lückenlos einlaufenden Gebinde 70 vorzugsweise durch mindestens einen Manipulator 10 des Gruppiermoduls 20 erfasst und entsprechend einem vorgegebenen Lagenschema angeordnet und/oder ausgerichtet.

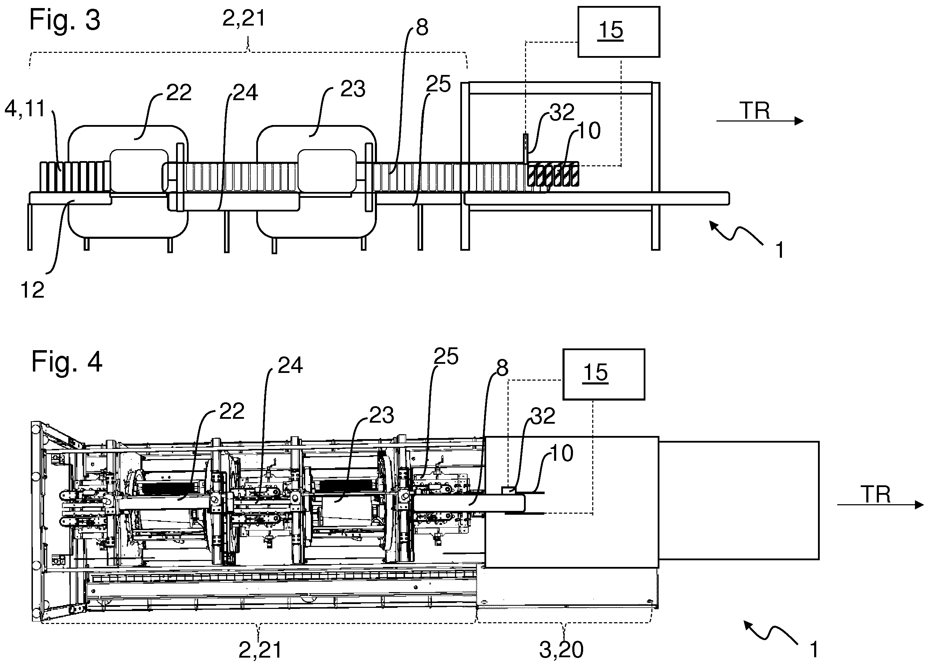

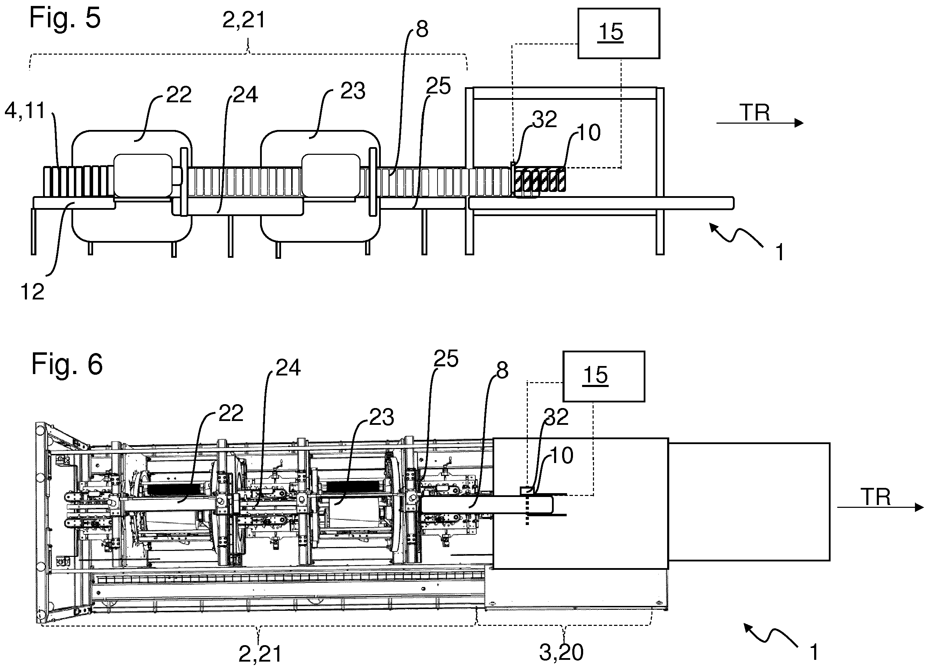

Die lückenlose Herstellung der Gebinde 7 innerhalb des Gebindebildungsmodul 2 kann beispielsweise durch das Aufbringen einer Umreifung, eines sogenannten Stretchsleeve oder das Umwickeln der lückenlos einlaufenden Artikel 4 vermittels einer Stretchfolie 9 zu einer Artikelstange 8 (vergleiche auch Figuren 3 bis 17) erfolgen. Handelt es sich bei dem Gebindebildungsmodul 2 beispielsweise um ein Stretchpackmodul 21, dann werden die einzelne Gebinde 7 vermittels einer geeigneten Schneidvorrichtung 30 abgetrennt, die beispielsweise einen glühenden Schneidedraht o.ä. umfasst. Dabei wird wobei die lückenlose Formation F7 der Gebinde 7 beibehalten.

Der Vorteil eines derartigen Gebindebildungsmoduls 2 bei dem aus in lückenloser Formation F4 einlaufenden Artikeln 4 in lückenloser Formation F7 auslaufende Gebinde 7 gebildet werden, besteht darin, dass hierbei keine Nachlauf- oder Pufferstrecke notwendig ist, wenn die gebildeten Gebinde 7 aufgrund eines Defekts einer nachgeordneten Maschine o.ä. nicht ausreichend schnell abgearbeitet werden können. Eine solche Nachlauf- oder Pufferstrecke ist beispielsweise bei der Herstellung von Schrumpfverpackungen nach einem Schrumpftunnel zwingend notwendig, da in diesem Fall nicht einfach der Nachschub an Gebinden aus dem Schrumpftunnel durch Anhalten der den Schrumpftunnel durchlaufenden Fördervorrichtung gestoppt werden kann. Stattdessen muss der Schrumpftunnel leergefahren werden, d.h. die aktuell im Schrumpftunnel befindlichen Gebinde müssen aus diesem entfernt werden, da diese ansonsten zu stark erwärmt werden, was zu Defekten der Schrumpfverpackung führen kann und dementsprechend auch zu sekundären Verschmutzungen des Schrumpftunnels. Stattdessen kann bei der vorliegend beschriebenen Behälteranlage 1 das Gebindehandhabungsmodul 3 unmittelbar anschließend bzw. nur geringfügig beabstandet ohne Pufferstrecke hinter dem Gebindebildungsmoduls 2 angeordnet werden. Diese sogenannte geblockte Anordnung ermöglicht eine kompakte Anlage mit geringem Footprint.

Figur 2 zeigt eine seitliche Darstellung einer weiteren Ausführungsform einer Behälterbehandlungsvorrichtung 1. Hierbei ist das Gebindebildungsmoduls 2 ein Stretchpackmodul 21, wie es beispielsweise in der Anmeldung mit dem Aktenzeichen DE 10 2016 200 554.5 beschrieben wird, deren Inhalt hiermit in diese Anmeldung aufgenommen wird und deren Inhalt dem Leser der vorliegenden Anmeldung als bekannt gelten soll. Diese dient dem Verpacken von Artikeln 4 wie bspw. von Getränkebehältern, die als Artikelstrom 11, insbesondere in geschlossener Formation F4 in zwei- oder mehrbahnigem Zulauf mittels einer ersten Horizontalfördereinrichtung 12 wie bspw. einem Förderband, einem Mattenkettenförderer o. dgl. in Transportrichtung TR zu einem ersten Wickelmodul 22 befördert und dort mit mindestens einer Lage einer streckbaren Folie, einer sog. Stretchfolie umwickelt werden. Die Stretchfolie wird in an sich bekannter Weise wendeiförmig um die paarweise nebeneinander beförderten Artikel 4 gewickelt, wobei eine ausreichende Spannung der Folie für den festen mechanischen Zusammenhalt des Artikelstroms 11 sorgt. Im ersten Wickelmodul 21 können die Artikel 4 typischerweise auf einer unteren Gleitplatte gleiten, die ebenfalls umwickelt wird. Im weiteren Förderverlauf wird der schon umwickelte Artikelstrom 11 jedoch über die Gleitplatte gezogen, wobei sich die Stretchfolie nach dem Verlassen der Gleitplatte aufgrund ihrer Vorspannung auch an die Unterseite der Artikel 4 anlegt.

Ein dem ersten Wickelmodul 20 nachgeordnetes erstes Vorschubmodul 24 sorgt für den Weitertransport des schon mit mindestens einer Lage an Stretchfolie umwickelten Artikelstroms 11, typischerweise mittels oberen und unteren Vorschubbändern bzw. Vorschubriemen, die über die Länge des ersten Vorschubmoduls 24 endlos an den Ober- und Unterseiten des Artikelstroms 11 umlaufen und für dessen Weiterbeförderung zum nachfolgenden zweiten Wickelmodul 23 sorgen. Die seitliche Führung können bspw. geeignete Leitschienen übernehmen, die links und rechts den Artikelstrom 11 abstützen und seitlich führen.

Auf diese Weise in Transportrichtung TR weiterbefördert, passiert der Artikelstrom 11 anschließend ein zweites Wickelmodul 23, wo wenigstens eine zweite Lage der Stretchfolie wendeiförmig um den Artikelstrom 11 gewickelt wird, sinnvollerweise in anderem Wickelwinkel als im ersten Wickelmodul 22. Ein dem zweiten Wickelmodul 23 nachgeordnetes zweites Vorschubmodul 25 sorgt wiederum für den Weitertransport des nun mit mehreren Lagen an Stretchfolie umwickelten Artikelstroms, der nachfolgend auch als Artikelstange 8 bezeichnet wird. Der Transport der Artikelstange 8 erfolgt, typischerweise ebenfalls mittels oberen und unteren Vorschubbändern bzw. Vorschubriemen, die über die Länge des zweiten Vorschubmoduls 25 endlos an den Ober- und Unterseiten der Artikelstange 8 umlaufen und für dessen Weiterbeförderung zum nachfolgenden Gebindehandhabungsmodul 3 sorgen. Die seitliche Führung im zweiten Vorschubmodul 25 können vorzugsweise wiederum geeignete Leitschienen übernehmen, die links und rechts die Artikelstange 8 abstützen und seitlich führen.

Im Bereich des zweiten Vorschubmoduls 25 bzw. zwischen dem zweiten Vorschubmodul 25 und den Gebindehandhabungsmodul 3 kann eine Schneidvorrichtung 31 vorgesehen sein, die aus der Artikelstange 8 Gebinde (nicht dargestellt) mit jeweils einer definierten Anzahl an Artikeln 4 abtrennt. Hierzu wird die Artikelstange 8 in Ebenen senkrecht zur Transportrichtung TR wahlweise mit Perforationen versehen und/oder zwischen aufeinanderfolgenden Artikeln 4 bzw. Artikelpaaren oder Artikelgruppen mehrerer nebeneinander beförderter Artikel 4 unter Ausbildung von nacheinander beförderten Gebinden durch Zerschneiden der Stretchfolie durchtrennt. Anschließend werden die voneinander getrennten, weiterhin lückenlos aufeinanderfolgend in geschlossener Formation angeordneten Gebinde (in Figur 2 nicht dargestellt) in dem nachgeordneten Gebindehandhabungsmodul 3 sortiert, in Lagen zusammengestellt, palettiert und/oder gestapelt. Die Gebinde können beispielsweise in einem Gruppiermodul 20 mit einem Manipulator 10 zu Teillagen oder Lagen gemäß einem vorgegebenen Lagenschema zusammengestellt werden, insbesondere vermittels einer Handhabungsvorrichtung, wie sie in der Patentanmeldung mit dem Aktenzeichen DE 10 2016 206 639 beschrieben ist, deren Inhalt hiermit in diese Anmeldung aufgenommen wird und deren Inhalt dem Leser der vorliegenden Anmeldung als bekannt gelten soll.

Die durch das Stretchpackmodul 21 hergestellten und vermittels einer Schneidvorrichtung 31 voneinander abgetrennten Gebinde laufen in Transportrichtung TR weitgehend unmittelbar und lückenlos in das Gruppiermodul 20 und insbesondere in den Erfassungsbereich des Manipulators 10 ein und werden durch den Manipulator 10 entsprechend weiter gehandhabt.

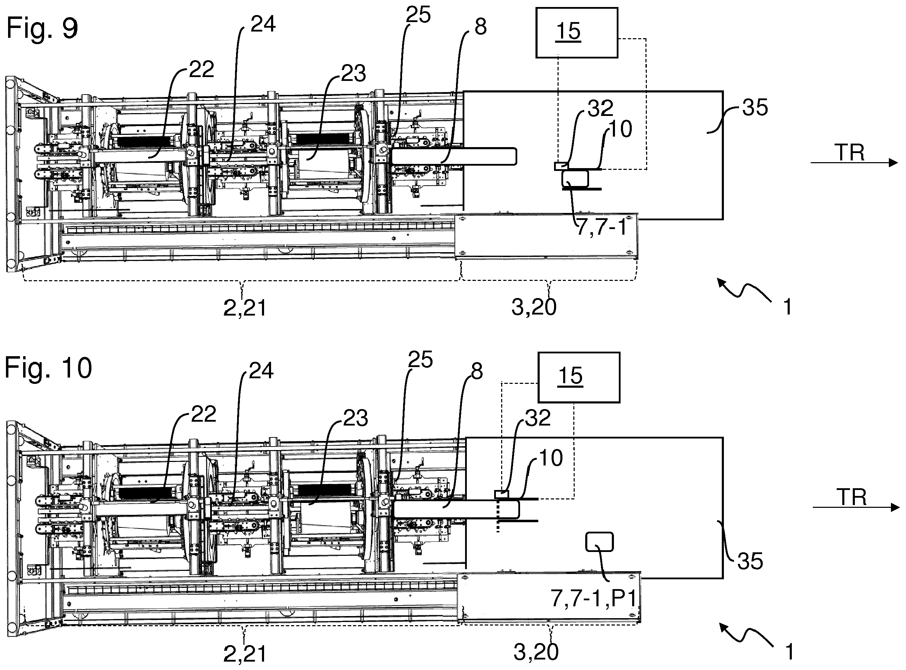

Figuren 3, 5 und 7 zeigen jeweils eine seitliche Darstellung einer weiteren Ausführungsform einer Behälterbehandlungsvorrichtung 1 mit einer in das Gruppiermodul 20 einlaufenden mit Stretchfolie umwickelten Artikelstange 8 und deren Bearbeitung innerhalb des Gruppiermoduls 20. Figuren 4, 6 und 8 zeigen den Figuren 3,5 und 7 entsprechende Darstellungen der Behälterbehandlungsvorrichtung 1 von oben. Figuren 9 bis 13 zeigen weitere Arbeitsschritte innerhalb einer Behälterbehandlungsvorrichtung 1 gemäß Figur 3.

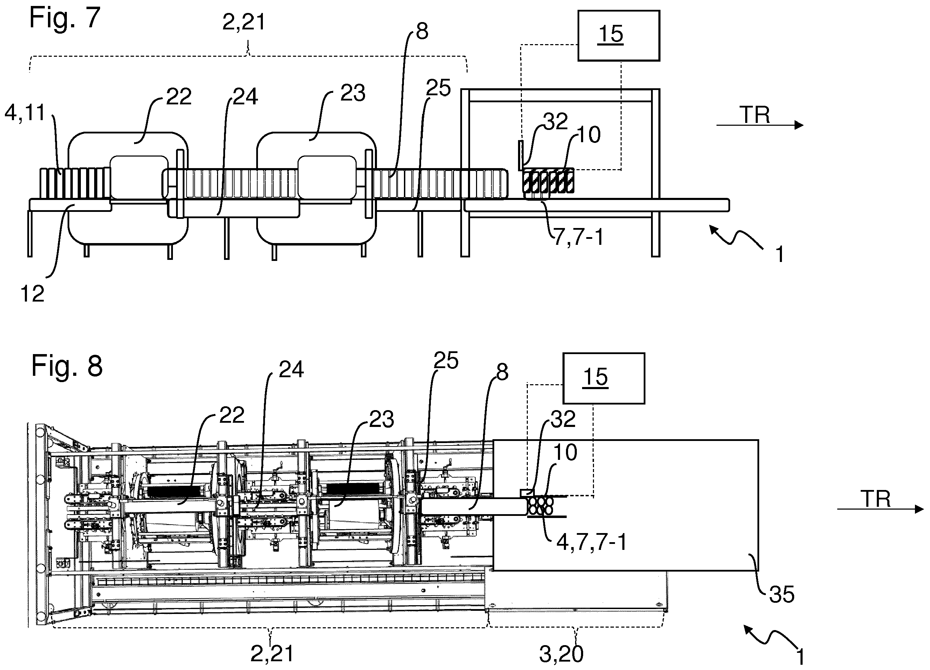

Bei dieser Ausführungsform ist eine Schneidvorrichtung 32 zum Abtrennen von entsprechenden Gebinden 7 (vergleiche Figuren 7 und 8) vom dem innerhalb der Stretchpackmoduls 21 gebildeten Artikelstange 8 direkt am Manipulator 10 des Gruppiermoduls 20 angeordnet.

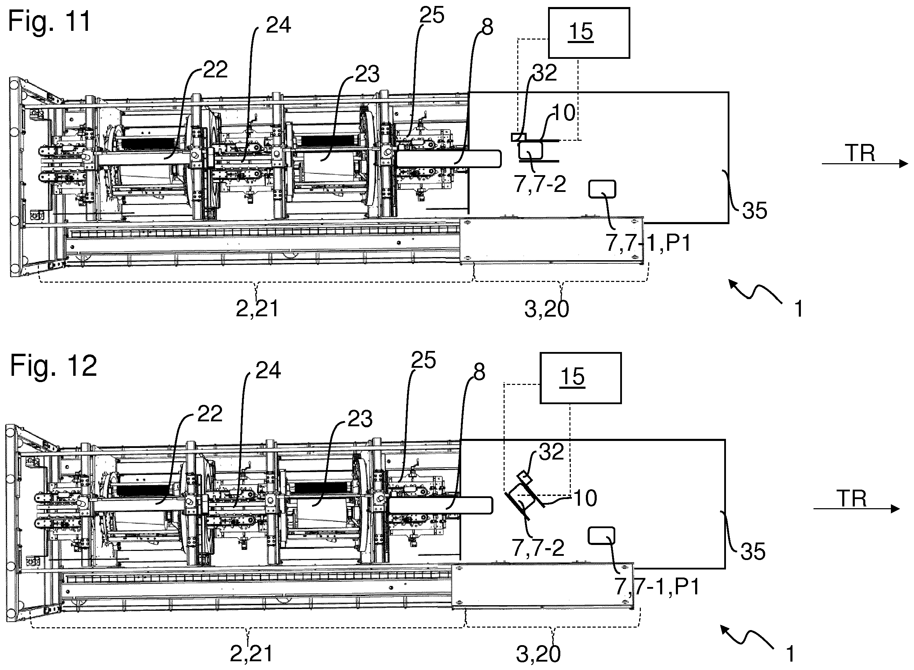

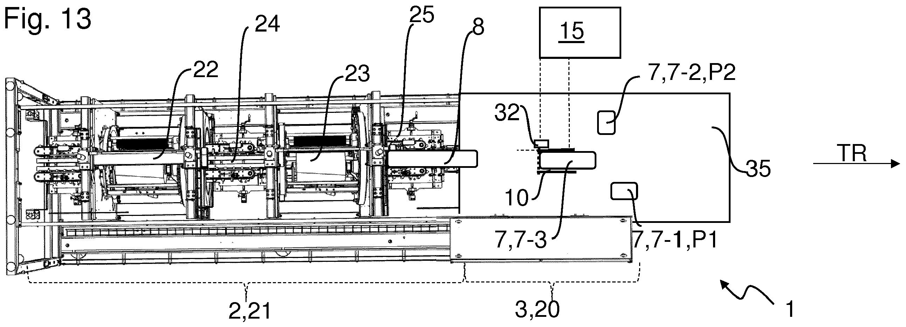

Gemäß den Figuren 3 und 4 greift der Manipulator 10 an der Artikelstange 8 an (Figuren 3, 4) und schneidet vermittels eines geeigneten Schneidwerkzeugs der am Manipulator 10 angeordneten Schneidvorrichtung 32 an der jeweiligen Position (Figuren 3, 4), wodurch ein Gebinde 7, 7-1 umfassend eine definierte Anzahl von Artikeln 4 (nur in Figur 8 dargestellt) von der Artikelstange 8 abgetrennt wird. Das abgetrennte Gebinde 7-1 wird - wie in den Figuren 9 und 10 dargestellt - vom Manipulator 10 von der nachfolgenden Artikelstange 8 in Transportrichtung TR abgetrennt und innerhalb des Gruppiermoduls 20 in eine Zielposition P1 und/oder Zielanordnung gemäß einem definierten Ziellagenschema verbracht wird. Dabei wird das Gebinde 7-1 in Transportrichtung TR seitlich gegenüber der einlaufenden Artikelstange 8 verschoben. Anschließend erfasst der Manipulator 10 weitere Artikel der Artikelstange 8 und die Schneidvorrichtung 32 trennt ein Gebinde 7-2 von der Artikelstange 8 ab (Figur 11), das nachfolgend in eine zweite Zielposition P2 verbracht wird (Figuren 12 und 13). Dabei wird das Gebinde 7-2 durch den Manipulator 10 um 90°im Uhrzeigersinn gedreht, so dass die Zielausrichtung der Artikel 4 des Gebindes 7-2 gegenüber der Ausrichtung der Artikel 4 innerhalb der Artikelstange 8 um 90° verdreht ist. In einem nachfolgenden Schritt wird ein weiteres Gebinde 7-3 durch den Manipulator 10 mit Schneidvorrichtung 32 erfasst, vom Artikelstrom 8 abgetrennt und in eine Zielposition (nicht dargestellt) verbracht. Hierbei wird deutlich, dass der Manipulator 10 beim Abgreifen nicht symmetrisch beladen werden muss, sondern auch eine Anzahl von Artikeln 4 der Artikelstange 8 abgreifen kann, deren zusammengefasste Länge geringer oder größer als die Greiferlänge des Manipulators 10 ist.

Die Positionierung des Manipulators 10 an der einlaufenden Artikelstange 8 und das Abtrennen der Gebinde 7 von der Artikelstange 8 durch die Schneidvorrichtung 30 ergibt sich insbesondere aufgrund des gewünschten herzustellenden Lagenschemas und wird über die Steuerungseinrichtung 15 kontrolliert und angesteuert.

Wie in Figur 13 dargestellt, muss der Manipulator 10 nicht zwingend an den zuvorderst einlaufenden Artikeln 4 der Artikelstange 8 angreifen, sondern kann auch in einem weiter hinter liegenden Bereich der Artikelstange 8 ansetzen und somit größere Gebinde 7 erzeugen und in eine Zielposition verbringen.

Während Gebinde 7 durch den Manipulator 10 von der Artikelstange 8 abgetrennt und in eine Zielposition befördert werden, läuft die Artikelstange 8 weiter kontinuierlich auf einer Horizontalfördereinrichtung 35 des Gruppiermoduls 20 ein. Zudem werden die in ihre Zielpositionen P1, P2 verbrachten Gebinde 7-1, 7-2 während des Abtrennens und Positionierens weiterer Gebinde 7, 7-3 weiter kontinuierlich auf einer Horizontalfördereinrichtung 35 des Gruppiermoduls 20 in Transportrichtung TR transportiert. Bei einer Störung des Gebindebildungsmodul 2 oder des Gebindehandhabungsmodul 30 werden beide gestoppt, bis der Fehler behoben ist.

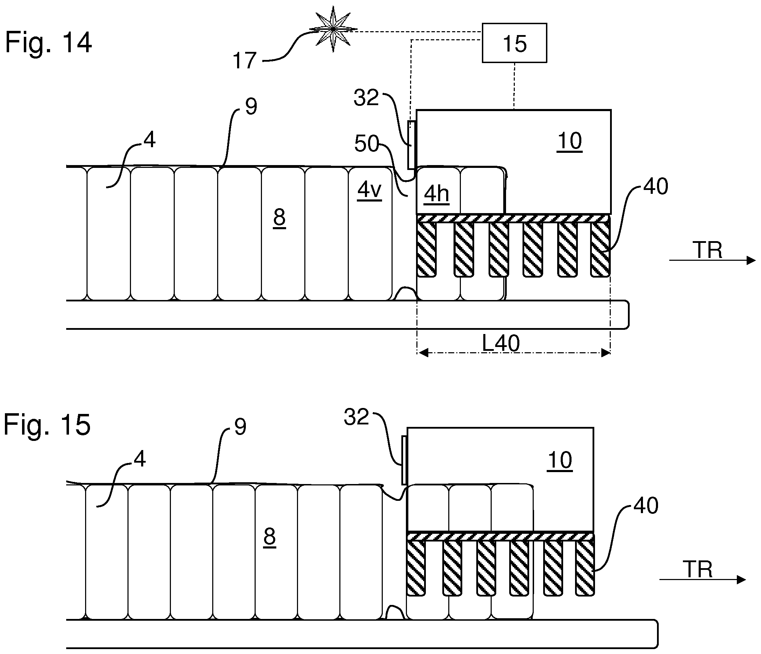

Figuren 14 bis 17 zeigen verschiedene Möglichkeiten des Abtrennens einer Mehrzahl von Artikeln 4 von einer mit Stretchfolie 9 umwickelten Artikelstange 8 zur Ausbildung unterschiedlicher Gebinde, insbesondere zur Ausbildung von Gebinden mit einer unterschiedlichen Anzahl von Artikeln 4.

Der Manipulator 10 umfasst beispielsweise zwei gegeneinander zustellbare Klemmgreifer 40 zum Abgreifen der gewünschten Artikel 4 von der Artikelstange 8. Der Manipulator 10 positioniert die Klemmgreifer 40 entsprechend der zu erzeugenden Gebindegröße an der Artikelstange 8. Die am Manipulator 10 integrierte Schneidvorrichtung 32, beispielsweise ein Messer, ein glühender Trenndraht o.ä. schneidet in einer Ebene senkrecht zur Transportrichtung TR zwischen zwei Artikeln 4 der Artikelstange 8. Durch eine kurzzeitige Zugbewegung des Manipulators 10 in Transportrichtung TR kann die abzutrennende Artikelgruppe vor dem Durchtrennen der Stretchfolie 9 von den nachfolgenden Artikeln 4 der Artikelstange 8 zumindest geringfügig beabstandet und die Stretchfolie 9 dabei etwas gedehnt werden. Dies erlaubt der Schneidvorrichtung 32 einen sauberen Schnitt durch die Stretchfolie 9, ohne dabei Artikel 4 zu berühren und/oder zu beschädigen. Gegebenenfalls kann ein der Schneidvorrichtung 32 zugeordneter und/oder steuerungstechnisch mit der Schneidvorrichtung gekoppelter Sensor 17 vorhanden sein (Figur 14), der über eine Bilderkennung den Schnittbereich zusätzlich überwacht. Befindet sich im Schnittbereich ein Artikel 4, dann übermittelt der Sensor 17 ein entsprechendes Signal an die Steuerungseinrichtung 15. Diese korrigiert den Bewegungsablauf des Manipulators 10 derart, dass dieser entweder relativ zu den abzugreifenden Artikeln 4 der Artikelstange 8 neu positioniert wird oder aber durch eine kurzzeitige Zugbewegung in Transportrichtung TR eine entsprechende Lücke 50 zwischen dem hintersten abzugreifenden Artikel 4h und dem nachlaufenden Artikel 4v der Artikelstange 8 zu erzeugen (vergleiche Figur 14).

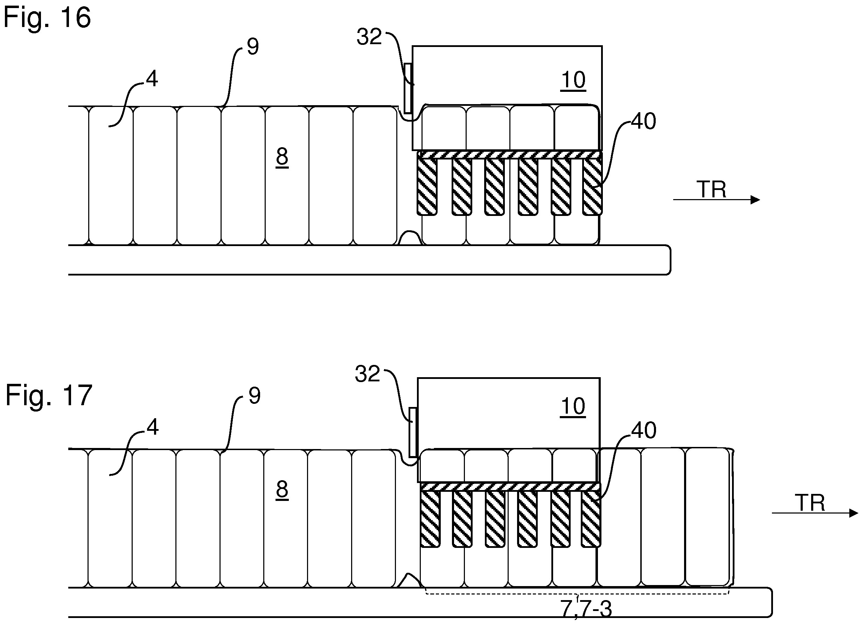

Eine Länge L40 der parallel zur Transportrichtung TR ausgerichteten Klemmgreifer 40 entspricht in der Regel einer Länge, die mehrere hintereinander angeordnete Artikel 4 in Transportrichtung TR einnehmen. Die Klemmgreifer 40 des Manipulators 10 können asymmetrisch an der Artikelstange 8 ansetzen und somit eine geringere Anzahl an Artikeln 4 von der Artikelstange abtrennen (vergleiche Figuren 14 und 15). Gemäß der in Figur 16 dargestellten Ausführungsform greifen die Klemmgreifer 40 eine durch ihre Länge L40 definierte maximale Anzahl von vier Artikeln 4 ab und trennen diese in einem nicht dargestellten Verfahrensschritt von den nachfolgenden Artikeln 4 der Artikelstange ab.

Gemäß der in Figur 17 dargestellten Ausführungsform können die Klemmgreifer 40 auch in einem hinteren Bereich an der Artikelstange 8 angreifen und somit eine Anzahl von Artikeln 4 von diesem abtrennen, die größer ist als durch die Länge L40 der Klemmgreifer 40 definiert. Dies ist insbesondere vorteilhaft möglich, da die derart abgetrennten Artikel 4 durch die Stretchfolie 9 weiterhin sicher zusammengehalten werden. Ein derart abgetrenntes großen Gebinde 7, 7-3 kann - wie in Figur 13 angedeutet- anschließend ebenfalls durch den Manipulator 10 in eine geeignete Zielposition und/oder Zielanordnung verbracht werden. Dabei wird ein solches Gebinde 7, 7-3 vorzugsweise durch den Manipulator 10 in Transportrichtung TR fluchtend zu der Artikelstange 8 verschoben. Es wäre aber aufgrund des guten Zusammenhalts der Artikel 4 innerhalb des Gebindes 7, 7-3 auch möglich, zusätzlich eine Bewegungskomponente senkrecht zu Transportrichtung TR aufzubringen und/oder das Gebinde 7, 7-3 gegenüber der ursprünglichen Anordnung der Artikel 4 in der Artikelstange 8 zu verdrehen.

Die Ausführungsformen, Beispiele und Varianten der vorhergehenden Absätze, die Ansprüche oder die folgende Beschreibung und die Figuren, einschließlich ihrer verschiedenen Ansichten oder jeweiligen individuellen Merkmale, können unabhängig voneinander oder in beliebiger Kombination verwendet werden. Merkmale, die in Verbindung mit einer Ausführungsform beschrieben werden, sind für alle Ausführungsformen anwendbar, sofern die Merkmale nicht unvereinbar sind. Die Erfindung wurde unter Bezugnahme auf bevorzugte Ausführungsformen beschrieben. Es ist für einen Fachmann vorstellbar, dass Abwandlungen oder Änderungen der Erfindung gemacht werden können, ohne dabei den Schutzbereich der nachstehenden Ansprüche zu verlassen. Es ist möglich, einige der Komponenten oder Merkmale eines der Beispiele in Kombination mit Merkmalen oder Komponenten eines anderen Beispiels anzuwenden.

### Bezugszeichenliste

- 1: Behälterbehandlungsvorrichtung
- 2: Gebindebildungsmodul
- 3: Gebindehandhabungsmodul
- 4, 4h, 4v: Artikel
- 5: erste Transporteinrichtung
- 6: Umverpackung
- 7, 7-1, 7-2, 7-3: Gebinde
- 8: Artikelstrang
- 9: Stretchfolie
- 10: Manipulator
- 11: Artikelstrom
- 12: Horizontalfördereinrichtung
- 15: Steuerungseinrichtung
- 17: Sensor
- 20: Gruppiermodul
- 21: Stretchpackmodul
- 22: erstes Wickelmodul
- 23: zweites Wickelmodul
- 24: erstes Vorschubmodul
- 25: zweites Vorschubmodul
- 30: Schneidvorrichtung
- 31: Schneidvorrichtung
- 32: Schneidvorrichtung
- 35: Horizontalfördereinrichtung
- 40: Klemmgreifer
- 50: Lücke

- F4, F7: Formation
- L40: Länge
- P1, P2: Zielposition
- TR: Transportrichtung

## Patentansprüche

1. Vorrichtung (1) zum Umgang mit in mindestens einer Reihe (1) hintereinander bewegten Stückgütern (7), die Stückgüter (7) jeweils umfassend eine Mehrzahl von durch eine Umverpackung (6) zusammengefasste Artikel (4), die Vorrichtung (1) umfassend
- wenigstens eine Transporteinrichtung (5), über welche unmittelbar aufeinanderfolgende Artikel (4) in einer Reihe oder in einer Mehrzahl von Parallelreihen annähernd ohne Beabstandung als geschlossene Formation (F4) zu einem Stückgutvorbereitungs- oder -bereitstellungsmodul (2) transportierbar sind,
- mindestens ein Stückgutvorbereitungs- oder -bereitstellungsmodul (2) zum Aufbringen der Umverpackung (6) um die Artikel (4) zur zumindest vorbereitenden Ausbildung von Stückgütern (7);
- mindestens einen Manipulator (10) für Stückgüter (7) mit einem Erfassungsbereich;
- wobei der mindestens eine Manipulator (5) zum klemmenden und/oder kraftformschlüssigen Entgegennehmen sowie zum räumlichen Abtrennen und Überführen in eine Zielposition (P) und/oder -ausrichtung mindestens eines Stückgutes (7) aus einer Anordnung von in mindestens einer Reihe kontinuierlich in seinen Erfassungsbereich transportieren, ohne Beabstandung oder mit minimalen Abständen hintereinander angeordneten und mit einer Umverpackung (6) umfassten Artikeln (4) ausgestattet ist.

2. Vorrichtung (1) nach Anspruch 1, wobei innerhalb des Stückgutvorbereitungs- oder -bereitstellungsmodul (2) mindestens eine Reihe (1) von hintereinander, annähernd ohne Beabstandung angeordneten Stückgütern (7) erzeugbar ist, die als geschlossene Formation (F7) dem Manipulator (10) zuführbar sind.

3. Vorrichtung (1) nach Anspruch 1, wobei das Stückgutvorbereitungs- oder -bereitstellungsmodul (2) ein Stretchpackmodul (21) ist, zum Umwickeln von Artikeln (4) mit einer Stretchfolie unter Ausbildung einer Artikel-Endlosanordnung (8).

4. Vorrichtung (1) nach Anspruch 3, wobei das Stretchpackmodul (21) eine Schneidvorrichtung (30) zur Abtrennung einzelner Stückgüter (7) von der Artikel-Endlosanordnung (30) umfasst oder wobei das Stretchpackmodul (21) eine Perforationsvorrichtung zur Vorbereitung des Abtrennens einzelner Stückgüter (7) von der Artikel- Endlosanordnung (30) umfasst.

5. Vorrichtung (1) nach Anspruch 3, wobei zwischen dem Stretchpackmodul (21) und dem Erfassungsbereich des Manipulators (10) eine Schneidvorrichtung (31) zur Abtrennung einzelner Stückgüter (7) von der Artikel- Endlosanordnung (8) angeordnet ist oder wobei zwischen dem Stretchpackmodul (21) und dem Erfassungsbereich des Manipulators (10) eine Perforationsvorrichtung zur Vorbereitung des Abtrennens einzelner Stückgüter (7) von der Artikel-Endlosanordnung (8) angeordnet ist.

6. Vorrichtung (1) nach Anspruch 3, wobei eine Schneidvorrichtung (32) oder eine Perforationsvorrichtung zur Abtrennung einzelner Stückgüter (7) von der Artikel-Endlosanordnung (8) am Manipulator (10) angeordnet ist oder wobei eine Perforationsvorrichtung zur Vorbereitung des Abtrennens einzelner Stückgüter (7) von der Artikel- Endlosanordnung (8) am Manipulator (10) angeordnet ist und wobei die Abtrennung mindestens eines Stückgutes (7) von der Artikel-Endlosanordnung (8) im Zusammenhang mit einer räumlichen Abtrennung des Stückgutes (7) und nachfolgende Anordnung in einer Zielposition (P) und/oder -ausrichtung durch den Manipulator (10) erfolgt.

7. Vorrichtung (1) nach einem der Ansprüche 4 bis 6, wobei die Vorrichtung (1) eine Steuerungseinrichtung (15) umfasst, wobei der Manipulator (10) und/oder die Schneidvorrichtung und/oder Perforationsvorrichtung über die Steuerungseinrichtung (15) ansteuerbar sind.

8. Vorrichtung (1) nach einem der voranstehenden Ansprüche, umfassend eine Steuerungseinrichtung (15), über welche der mindestens eine Manipulator (10) zum klemmenden und/oder kraft- und/oder formschlüssigen Erfassen von mit einer Umverpackung (6) umfassten Artikeln(4) und zum räumlichen Abtrennen des mindesten einen Stückgutes (7) sowie zum Verbringen des mindestens einen Stückgutes (7) in die definierte Zielposition (P) und/oder -ausrichtung ansteuerbar ist, wobei auf der Steuerungseinrichtung (15) Informationen zu einer aus einer Vielzahl an Stückgütern (7) zu bildenden Anordnung hinterlegt sind, wobei die Zielposition (P) und/oder -ausrichtung als Bestandteil der Informationen dem jeweiligen mindestens einen Stückgut (7) eine bestimmte Lage und/oder relative Orientierung innerhalb der Anordnung zuordnet.

9. Vorrichtung (1) nach einem der voranstehenden Ansprüche, wobei zwischen dem Stückgutvorbereitungs- oder -bereitstellungsmodul (2) und dem Erfassungsbereich des Manipulators (10) ein Transferbereich für die mit einer Umverpackung (6) umfassten Artikel (4) und/oder Stückgüter (7) angeordnet ist.

10. Vorrichtung (1) nach Anspruch 9, wobei der Transferbereich eine maximale Länge von 20m aufweist, insbesondere wobei der Transferbereich kürzer als 10m ist, besonders bevorzugt kürzer als 5m.

11. Verfahren zum Umgang mit in mindestens einer Reihe (1) hintereinander bewegten Stückgütern (7), die Stückgüter (7) jeweils umfassend eine Mehrzahl von durch eine Umverpackung (6) zusammengefasste Artikel (4), bei dem
- in einer Reihe oder in einer Mehrzahl von Parallelreihen ohne Abstände oder mit minimalen Abständen unmittelbar aufeinanderfolgende Artikel (4) als geschlossene Formation (F4) zugeführt werden;
- in geschlossener Formation (F4) einlaufende Artikel (4) mit einer Umverpackung (6) zusammengefasst werden;
- wobei wenigstens ein Stückgut (7) klemmend und/oder kraft- und/oder formschlüssig von einer Anordnung von in mindestens einer Reihe kontinuierlich ohne Beabstandung oder mit minimalen Abständen hintereinander angeordneten und mit einer Umverpackung (6) umfassten Artikeln (4) räumlich abgetrennt und in eine definierte relative Zielposition (P) und/oder -ausrichtung gegenüber nachfolgenden mit einer Umverpackung (6) umfassten Artikeln (4) gebracht wird.

12. Verfahren nach Anspruch 11, wobei innerhalb des Stückgutvorbereitungs- oder - bereitstellungsmodul (2) eine Mehrzahl von Artikeln (4) vermittels einer Umverpackung (6) zusammengefasst werden, wobei die geschlossene Formation (F4) der Artikel (4) im Wesentlichen erhalten bleibt und wobei mindestens eine Reihe (1) an annähernd ohne Beabstandung hintereinander als geschlossene Formation (F7) angeordneten Stückgütern (7) erzeugt wird.

13. Verfahren nach Anspruch 11, wobei innerhalb des Stückgutvorbereitungs- oder - bereitstellungsmodul (2) eine Mehrzahl von Artikeln (4) vermittels einer Umverpackung (6) zu einer Artikel- Endlosanordnung (8) zusammengefasst werden, wobei eine Abtrennung der einzelnen Stückgüter (7) von der Artikel-Endlosanordnung (8) erst im Zusammenhang mit der räumlichen Abtrennung der Stückgüter (7) und nachfolgende Anordnung in einer Zielposition (P) und/oder - ausrichtung erfolgt.

14. Verfahren nach einem der Ansprüche 11 bis 13, wobei eine Schneidvorrichtung zum Abtrennen von Stückgütern (7) von einer Artikel- Endlosanordnung (8) und ein Manipulator (10) zum räumlichen Abtrennen wenigstens eines Stückgutes (7) und Anordnung des wenigstens einen Stückgutes (7) in einer definierten relativen Zielposition (P) und/oder -ausrichtung gegenüber nachfolgenden mit einer Umverpackung (6) umfassten Artikeln (4) steuerungstechnisch miteinander gekoppelt sind.

15. Verfahren nach einem der Ansprüche 11 bis 14, wobei die Abtrennung einer Anzahl von Artikeln (4) zur Ausbildung eines vom Manipulator (10) abzugreifenden Stückgutes (7) und die Anordnung dieses Stückgutes (7) durch den Manipulator in einer definierten relativen Zielposition (P) und/oder -ausrichtung gegenüber nachfolgenden Stückgütern (2) durch ein in einer Steuerungseinrichtung (15) gespeichertes Programm kontrolliert wird, dass die Informationen zu einer gewünschten Anordnung von mit einer Umverpackung (6) zusammengefassten Artikeln(4) und/oder Stückgütern (7) enthält, wobei die Zielposition (P) und/oder - ausrichtung als Bestandteil der Informationen dem jeweiligen mindestens einen Stückgut (7) eine bestimmte Lage und/oder relative Orientierung innerhalb der Anordnung zuordnet.
